# EUROPEAN PATENT APPLICATION

(11) **EP 4 531 198 A1**
(43) Date of publication of application: **02.04.2025**
(21) Application number: 24200728.4
(22) Date of filing: 17.09.2024
(51) Int. Cl.: H01M 50/533

(54) **CURRENT COLLECTING PLATE AND BATTERY UNIT COMPRISING CURRENT COLLECTING PLATE**

(30) Priority: 28.09.2023 CN 202311271994
(71) Applicant: Techtronic Cordless GP, Anderson, SC 29621 (US)
(72) Inventor: LI, Jin Wei, Dongguan City (CN); GENG, Dan, Dongguan City (CN)
(74) Representative: Novagraaf Group

(57) **Abstract**

The present invention relates to a current collecting plate for a negative electrode of a battery unit. The current collecting plate comprises: a main body part that forms a main body of the current collecting plate; a welding region that is arranged at the approximate center of the main body part; and a connecting part that connects the welding region to the main body part, wherein in addition to being connected to the connecting part, the welding region is separated from the main body part by a through opening.

## Description

### Technical field

The present invention belongs to the field of batteries, and more specifically the present invention relates to a current collecting plate and a battery unit comprising the current collecting plate.

### Background art

With the development of society, the battery has continuously developed quickly in terms of energy ratio, service life, etc., new energy devices with batteries, especially secondary batteries, as the energy storage apparatus have gradually become popular with consumers, and various types of batteries have gradually been applied on a large scale to various types of electronic devices. A battery that is internally provided with a cell acts as a representative of a small volume battery, has the characteristics of a small volume and being rechargeable, is widely used in various types of consumer-grade and industrial-grade electronic devices, and is able to significantly improve the experience of using electronic devices.

This type of secondary battery can be classified by shape as a cylindrical, prismatic or pouch-shaped secondary battery. Cylindrical secondary batteries have the advantages of high volume energy density, simple structure, easy assembly, convenient standardization, etc. With the development of technology, large cylindrical batteries have gradually become dominant in the market.

The cylindrical secondary battery typically comprises a cylindrical electrode assembly, a cylindrical can to which the electrode assembly is joined, an electrolyte injected into the can so that lithium ions can move, and a cover assembly joined to one side of the can to prevent electrolyte leakage and separation of the electrode assembly. In the present application, a single cylindrical secondary battery is also referred to as a battery unit.

Typical cylindrical secondary batteries, especially those without electrode plates, typically comprise a current collecting plate or a collector plate, which acts as a bridge component to provide an electrical connection between the electrode assembly and the corresponding battery terminal. The current collecting plate is usually welded to the inside of a housing of the battery unit. Due to the very limited access to the components of the battery unit, it may be difficult to achieve and/or verify a good weld between the current collecting plate and the battery unit housing.

Therefore, the present field still needs a current collecting plate and a battery unit comprising the current collecting plate that can effectively mitigate the problem of poor welding caused by the current collecting plate, and thus improve the reliability of the battery unit.

### Summary of the invention

One of the purposes of the present application is to provide a current collecting plate and a battery unit comprising the current collecting plate that can effectively mitigate the problem of poor welding caused by the current collecting plate, and thus improve the reliability of the battery unit.

In order to solve the above technical problem, in a first aspect of the present application, a current collecting plate for a negative electrode of a battery unit is provided, characterized in that the current collecting plate comprises:
a main body part that forms a main body of the current collecting plate;
a welding region that is arranged at the approximate center of the main body part; and
a connecting part that connects the welding region to the main body part, wherein in addition to being connected to the connecting part, the welding region is separated from the main body part by a through opening.

In an embodiment of the first aspect of the present application, the through opening is formed into an approximate U shape around the welding region.

In an embodiment of the first aspect of the present application, the welding region is provided with a bumpy portion for welding to a housing of the battery unit.

In an embodiment of the first aspect of the present application, the bumpy portion is formed by stamping the welding region itself, or the bumpy portion is electrically connected to the welding region.

In an embodiment of the first aspect of the present application, the current collecting plate comprises a first side that faces an electrode assembly and a second side that faces the housing, and the bumpy portion is located on the second side and comprises multiple bumps, wherein a subset of the multiple bumps is constructed to be welded to the housing.

In an embodiment of the first aspect of the present application, the multiple bumps are formed into a rectangular arrangement, a round arrangement, a regular polygonal arrangement or a triangular arrangement.

In an embodiment of the first aspect of the present application, the welding region comprises a flat surface to be connected by laser welding to a housing of the battery unit.

In an embodiment of the first aspect of the present application, the width of the welding region is greater than the width of the connecting part.

In an embodiment of the first aspect of the present application, the width of the connecting part is 50 - 80% of the width of the welding region.

In an embodiment of the first aspect of the present application, the current collecting plate is an integral member that is obtained by stamping a metal plate.

In a second aspect of the present application, a battery unit is provided, comprising:
a cylindrical housing, the cylindrical housing comprising a first end and a second end that is opposite the first end, wherein the second end is closed;
an electrode assembly, the electrode assembly being positioned in the housing between the first end and the second end, and the electrode assembly comprising a positive electrode, a negative electrode and a separator between the positive electrode and the negative electrode; and
the current collecting plate for a negative electrode of a battery unit according to the first aspect of the present application, the current collecting plate being electrically connected to the housing.

In an embodiment of the second aspect of the present application, the negative electrode, the positive electrode and the separator are rolled into concentric layers around a central hole, and the welding region is coaxial with the central hole.

In an embodiment of the second aspect of the present application, the welding region is provided with a bumpy portion for being welded to the housing of the battery unit, and the bumpy portion is coaxial with the central hole.

In an embodiment of the second aspect of the present application, the welding region is larger than the central hole.

In embodiments of the present application, a current collecting plate and a battery unit comprising the current collecting plate according to the present invention can effectively mitigate the problem of poor welding caused by the current collecting plate, and thus improve the reliability of the battery unit.

### Brief description of the drawings

Objectives and features of the present invention will become apparent from the following detailed description with reference to the accompanying drawings. However, it should be understood that the drawings are designed for illustration only, and are not intended to limit the present invention.
Fig. 1 is an exploded 3D drawing of a battery unit according to an embodiment of the present invention.
Fig. 2 is a planar view of a positive electrode, a negative electrode and a separator comprised in the battery unit of Fig. 1 according to an embodiment of the present invention.
Fig. 3 is a schematic cutaway 3D drawing of a portion of the battery unit of Fig. 1 according to an embodiment of the present invention.
Fig. 4A is a planar view of a current collecting plate that can be used together with the battery unit of Fig. 1 according to an embodiment of the present invention.
Fig. 4B is a side view of the current collecting plate of Fig. 4A according to an embodiment of the present invention.
Fig. 5A is a planar view of a bumpy portion that is comprised in the current collecting plate of Figs. 4A and 4B according to an embodiment of the present invention.
Fig. 5B is a side view of the bumpy portion that is comprised in the current collecting plate of Figs. 4A and 4B according to an embodiment of the present invention.
Fig. 6 is a 3D drawing of a current collecting plate that can be used together with the battery unit of Fig. 1 according to an embodiment of the present invention.
Fig. 7 is a sectional view taken along section A-A of Fig. 1 of the current collecting plate of Figs. 4A and 4B undergoing a welding operation according to an embodiment of the present invention.
Fig. 8 is a flowchart illustrating a method used to assemble or connect electrical elements of a battery unit according to an embodiment of the present invention.

### Detailed description of the invention

The technical solutions of the present invention are described clearly and completely below with reference to the drawings; obviously, the described embodiments are some rather than all of the embodiments of the present invention. All other embodiments obtained by those of ordinary skill in the art based on the embodiments in the present invention without creative effort shall fall within the scope of protection of the present invention.

It should be noted that when an element is referred to as being "fixed to" or "arranged at" another element, it may be directly or indirectly on the other element. When an element is referred to as being "connected to" another element, it may be directly or indirectly connected to the other element.

It should be understood that the orientations or positional relationships indicated by the terms "length", "width", "upper", "lower", "front", "rear", "left", "right", "vertical", "horizontal", "top", "bottom", "inner", "outer", etc. are based on the orientations or positional relationships shown in the drawings, and are only for the convenience of describing the present application and simplifying the description, rather than indicating or implying that the device or element referred to must have a specific orientation or be constructed and operated in a specific orientation, and therefore cannot be construed as limiting the present application. In addition, the terms "first" and "second" are used for descriptive purposes only, and cannot be construed as indicating or implying relative importance or implicitly indicating the number of technical features indicated. Thus, features defined with "first" and "second" may explicitly or implicitly include one or more of the feature. In the description of the present application, "a plurality of" means two or more, unless explicitly and specifically defined otherwise.

The various specific technical features and embodiments described in this section may be combined in any suitable manner unless there is a contradiction. For example, different implementations may be formed by combining different specific technical features/embodiments/implementations. In order to avoid unnecessary repetition, the various possible combinations of the specific technical features/embodiments/implementations in the present application will not be described separately.

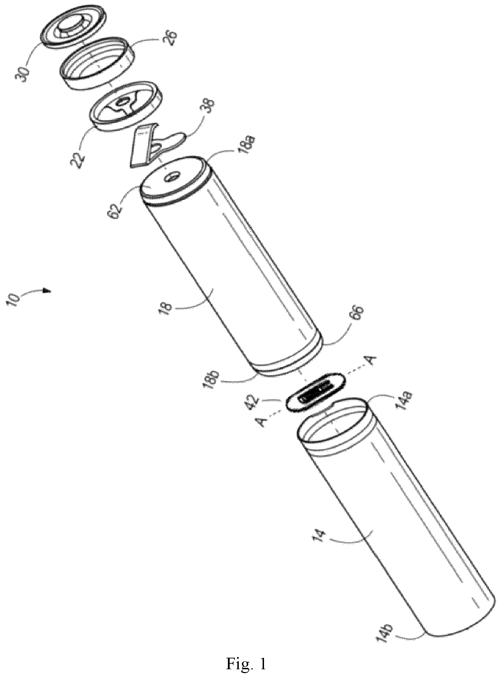

Fig. 1 shows a battery unit 10 according to some embodiments. The battery unit 10 comprises a housing 14, an electrode assembly 18 that is located inside the housing 14, a first insulating member 22 and a second insulating member 26. The battery unit 10 further comprises a first terminal 30 located at a first end 14a of the housing 14, a second terminal 34 located at a second end 14b of the housing 14, a first conductor 38 located in the housing 14 between the electrode assembly 18 and the first terminal 30, and a second conductor 42 located in the housing 14 between the electrode assembly 18 and the second terminal 34. In the embodiment shown, the first conductor 38 is a formable (for example, bendable, ductile, operatable, etc.) current collecting plate, collector plate and/or analog that is configured to electrically connect the electrode assembly 18 to the first terminal 30. Similarly, the second conductor 42 is a formable (for example, ductile, operatable, etc.) current collecting plate, collector plate and/or analog that is configured to electrically connect the electrode assembly 18 to the second terminal 34.

As shown in Fig. 1, the housing 14 generally provides a shell for the electrical elements (for example, the electrode assembly 18, the first terminal 30, the first conductor 38, the second conductor 42, etc.) of the battery unit 10. In some embodiments, some or all of the electrical elements are located within the housing 14. In the embodiment shown, the housing 14 is made of an insulating material such as plastic or other non-conductive material. In some embodiments, the housing 14 may be made of a conductive material such as steel, aluminum or other conductive metal. In some embodiments, the second end 14b is closed, and the housing 14 is used as a negative electrode terminal to facilitate the external connection of the battery unit 10; for example, the second terminal 34 can be integrated into the housing 14 at the second end 14b to form an integral cylindrical can with an opening at one end. In one or more embodiments, an upper part of the cylindrical can may be open during the assembly process of the secondary battery. Therefore, during the assembly process of the secondary battery, the electrode assembly 18 and the second current collecting plate 42, etc., can first be connected together and then inserted into the cylindrical can through the open upper part.

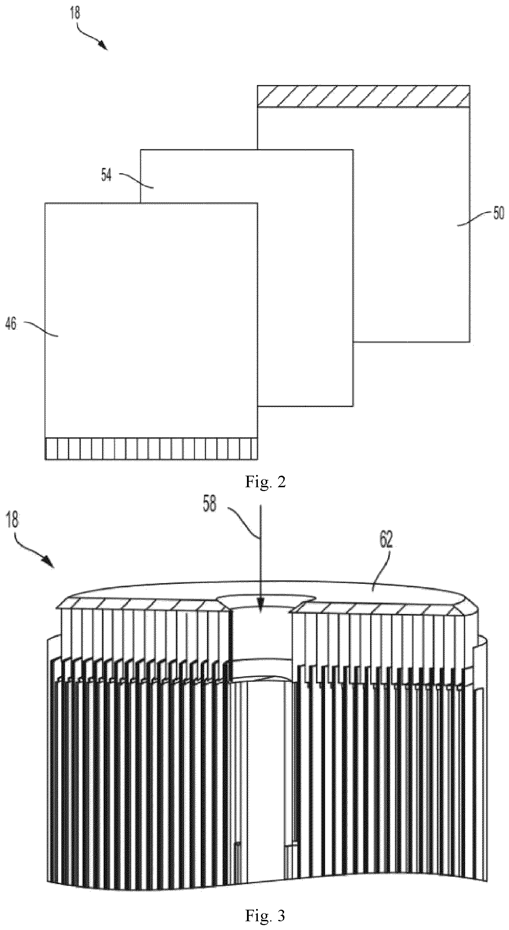

Now referring to Fig. 2, and briefly referring to Fig. 3, the electrode assembly 18 comprises a positive electrode 46, a negative electrode 50, and one or more separators 54 located between the positive electrode 46 and negative electrode 50. In the embodiment shown, the positive electrode 46 comprises a positive electrode plate, the negative electrode 50 comprises a negative electrode plate, and the separator 54 comprises a membrane or isolating sheet. As shown in Fig. 3, this positive electrode 46, negative electrode 50 and isolating member 54 can be rolled into concentric layers around a central hole 58 of the electrode assembly 18 to form a jelly roll. In some embodiments, the electrode assembly 18 is wound around a central pin, which may be removed after the winding operation is complete to form the central hole 58.

Again referring to Fig. 1 and continuing to refer to Fig. 3, once wound, a first end 18a and a second end 18b of the electrode assembly 18 may comprise exposed or uncoated portions of the positive electrode 46 and negative electrode 50. An exposed portion at the first end 18a can be rubbed flat into a flat rough surface to form a first flattened portion 62, and an exposed portion at the second end 18b can be rubbed flat into a flat rough surface to form a second flattened portion 66. In some embodiments not shown, the first flattened portion 62 is a negative electrode flattened portion, and the second flattened portion 66 is a positive electrode flattened portion. The first flattened portion 62 provides an abutting surface for the first conductor 38, such that the first conductor 38 may be connected (for example, welded, fixed, adhered, fastened, etc.) to the electrode assembly 18. Similarly, the second flattened portion 66 provides a connection for the second conductor 42, as discussed in more detail below. Therefore, the first conductor 38 can be constructed to electrically connect the first flattened portion 62 to the first end 14a of the housing 14. The second conductor 42 can be constructed to electrically connect the second flattened portion 66 to the second end 14b of the housing 14.

In some embodiments, the first insulating member 22 is made of plastic and/or rubber. The first insulating member 22 may be provided with a through hole which allows the first conductor 38 to extend through the first insulating member 22 and make electrical contact with the first terminal 30. The first flattened portion 62 can be arranged or placed in the first insulating member 22 to prevent contact between the first flattened portion 62 and the housing 14. The first terminal 30 can be arranged in the second insulating member 26 which is supported on the first insulating member 22. In some embodiments, once the electrode assembly 18 and other electrical elements are arranged in the housing 14, the first insulating member 22 and the second insulating member 26 are crimped on the first terminal 30.

Still referring to Fig. 1, the first terminal 30 may provide electrical contact with an external device, so as to provide power from the electrode assembly 18 to the external device. In some embodiments, the first terminal 30 may receive power from an external device to recharge the electrode assembly 18. In some embodiments, the first terminal 30 is a positive terminal that is electrically connected to a positive electrode plate (for example, the positive electrode 46) within the electrode assembly 18, and the second terminal 34 is a negative terminal that is connected to a negative electrode plate (for example, the negative electrode 50). For example, the first terminal 30 may connect the positive electrode 46 of the electrode assembly 18 to a positive electrode terminal of an external apparatus that is powered by the battery unit 10. In some embodiments, the first terminal 30 is made of metal, for example stainless steel.

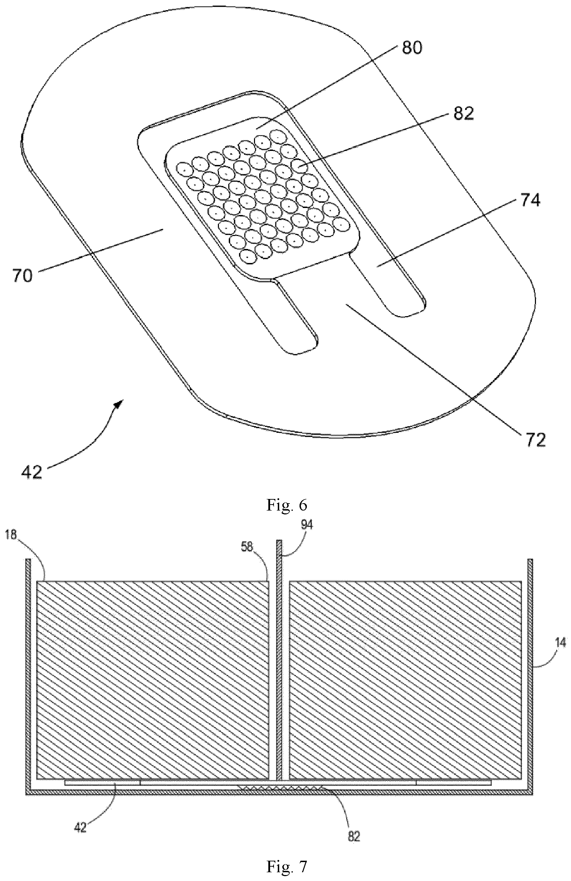

In some embodiments of the present invention, the second conductor 42 is a negative electrode current collecting plate, for example. Fig. 6 is a 3D drawing of a current collecting plate 42 that can be used together with the battery unit of Fig. 1 according to an embodiment of the present invention. In an embodiment of the present invention, the second conductor or current collecting plate 42 is an integral member that is obtained by stamping a thin metal plate. For example, the second conductor 42 comprises a main body part 70. Preferably, the main body part 70 constitutes an outer contour of the second conductor 42. As shown in Fig. 6, a welding region 80 is provided at the center of the main body part 70. In an embodiment of the present invention, the welding region has a flat surface, so that, when being welded to the housing of the battery unit using laser welding, the flat surface of the welding region contacts the housing, thereby facilitating the operation of the laser welding. In an embodiment of the present invention, the welding region 80 is a current collecting boss 80. In an embodiment of the present invention, the current collecting boss 80 is provided with a bumpy portion 82, used for being welded to the second terminal 34 or the bottom of the housing 14, for example. In an embodiment of the present invention, the bumpy portion 82 is formed by stamping the current collecting boss 80 itself; that is, the current collecting boss 80 itself may form the bumpy portion 82. In another embodiment of the present invention, the bumpy portion 82 is formed as a single component that is independent of the current collecting boss 80, and is electrically connected (for example, welded) to the current collecting boss 80, and occupies most of the area of the current collecting boss 80. A connecting part 72 is provided between the current collecting boss 80 and the main body part 70 to connect the current collecting boss 80 to the main body part 70. In an embodiment of the present invention, for example, a portion of a metal plate is cut or ablated to form the current collecting boss 80 and the connecting part 72. This is achieved, for example, by a laser beam, cutter and/or punching apparatus forming a through opening or cutout part 74 on the metal plate. In an embodiment of the present invention, the through opening 74 may have an approximate C-shape or U-shape, so that the connecting part 72 and the current collecting boss 80 together form a cantilever beam, and the current collecting boss 80 is able to move relative to a main plane of the main body part 70 or the second conductor 42.

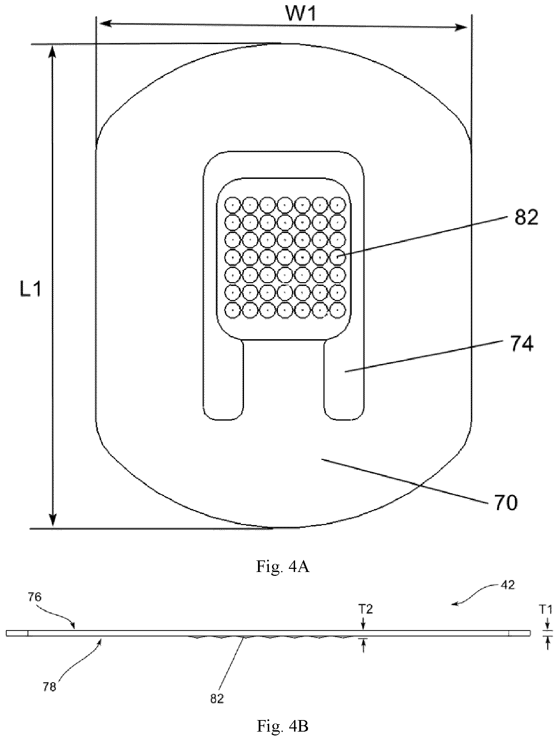

Now referring to Figs. 4A - 4B, the second conductor 42 comprises a first side 76 and a second side 78 that is opposite the first side 76. The second conductor 42 may be connected to the second end 18b of the electrode assembly 18, so that the first side 76 of the second conductor 42 faces the electrode assembly 18, and the second side 78 faces the second end 14b of the housing 14, and is configured to connect the second end 18b of the electrode assembly 18 to the second end 14b of the housing 14. The second side 78 of the second conductor 42 may comprise a bumpy portion 82 for improving a welding operation of welding the second conductor 42 to the housing 14. In some embodiments, the bumpy portion 82 is located approximately at the center of the second side 78 of the second conductor 42 and is coaxial with the central hole 58. In an embodiment of the present invention, in a projected area, the welding region is larger than the central hole, as shown schematically in Fig. 7. In an embodiment of the present invention, a welding part that is parallel to a direction of extension of the connecting part 72 and the current collecting boss 80 (for example, the A-A direction of Fig. 1) is formed on the first side 76, and the welding part is used for being welded, for example, to the electrode assembly 18, and in particular welded to the second flattened portion 66 of electrode assembly 18, as shown in Fig. 1. In an embodiment of the present invention not shown, the welding part comprises two welding parts that are located respectively on two sides of the current collecting boss 80 on the first side 76 of the main body part 70, for example being two protruding ribs to help form a good weld with the second flattened portion 66.

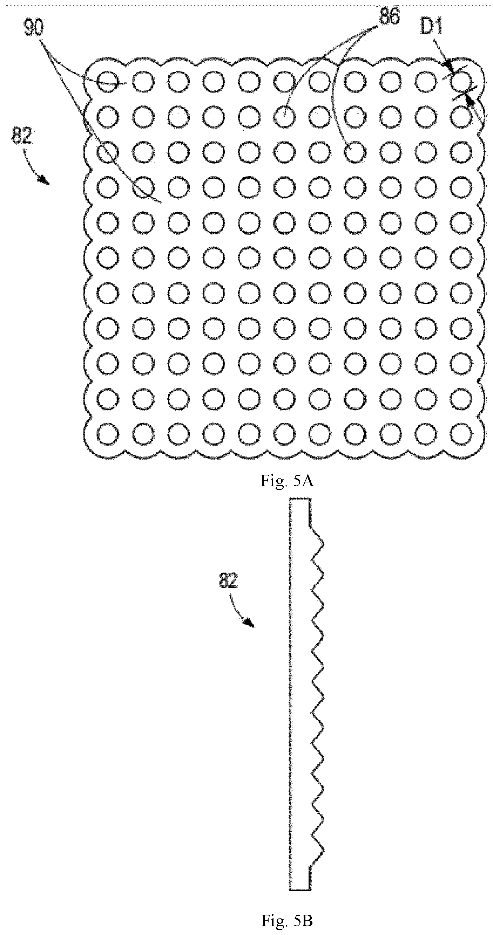

Referring to Fig. 5A, the bumpy portion 82 may have more than one bump 86. The bumpy portion 82 may also have multiple recesses 90. The second conductor 42 may be stamped or pressed by other means to have a bump 86 and a recess 90. The bumps 86 and recesses 90 may be formed on the second conductor 42, such that each recess 90 is limited by the space between the adjacent bumps 86. Every bump 86 and recess 90 may have approximately equal dimensions. In some embodiments, the bumps 86 may be formed by soldering on the second conductor 42. In some embodiments, the bumpy portion 82 is a separate component that is welded to the second conductor 42. As shown in Fig. 5B, in some embodiments, the bumpy portion 82 may have a serrated cross section; however, the cross section of the bumpy portion 82 may be any suitable shape.

In some embodiments, the bumps 86 may be arranged in rows and columns within the bumpy portion 82, so that the outer periphery of the bumpy portion 82 is approximately square. In the embodiments shown in Figs. 4A - 4B and Fig. 6, the bumpy portion 82 comprises 49 bumps 86 arranged in seven rows and seven columns. However, the number of bumps 86 is not limited to 49, and the numbers of rows and columns are not limited to seven each. For example, as shown in Figs. 5A - 5B, the bumpy portion 82 may comprise 121 bumps 86 arranged in eleven rows and eleven columns. In other embodiments, the bumpy portion 82 may comprise 16 bumps 86 arranged in four rows and four columns. In some embodiments, the number of bumps 86 included in each row or column varies by row or column depending on the requirements for a given application. In some embodiments of the present invention, the multiple bumps may form a rectangular arrangement, a round arrangement, a regular polygonal arrangement or a triangular arrangement.

The bumps 86 may be formed by protrusions that protrude from a surface of the second conductor 42, and the recesses 90 may be formed from the surface of the second conductor 42. The bumpy portion 82 may be formed from material identical or different to the second conductor 42. For example, one or both of the second conductor 42 and the bumpy portion 82 may be formed from nickel. In some embodiments, one or both of the second conductor 42 and the bumpy portion 82 are formed from copper and include a nickel coating.

Fig. 7 shows a sectional view of a battery unit 10 undergoing a welding operation to electrically connect a second end 18b of an electrode assembly 18 to a second end 14b of a battery unit housing 14. It should be explained that the second conductor 42 has been welded to the electrode assembly 18, in particular welded to a second flattened portion 66 of the electrode assembly 18. That is, the second conductor 42 and the electrode assembly 18 have been welded together to form a whole. During the welding operation, the electrode assembly 18 and the second conductor 42 are inserted from above into the battery unit housing 14, and a welding head 94 is inserted through a central hole 58 of the electrode assembly 18 to approach the second end 18b of the electrode assembly 18, so that the welding head 94 contacts a first side 76 of the second conductor 42. A subset or number of the bumps 86 of the bumpy portion 82 on a second side 78 of the second conductor 42 are constructed to melt the second conductor 42, and in particular the bumpy portion 82, to weld to the second end 14b of the battery unit housing 14 in response to the welding operation carried out by the welding head 94. The welding operation may comprise applying a voltage to the first side 76 of the second conductor 42, so that current flows through the second conductor 42 to the housing 14. In some examples, the welding head 94 is a resistance welding head.

The number of bumps 86 that are constructed to melt can depend on multiple factors, such as the duration of the welding operation (for example, the duration of the current being applied to the first side 76 of the second conductor 42), the amount of current being applied to the first side 76 of the second conductor 42, or a combination thereof. However, in some examples, other parameters or factors can influence the melting of the bumps 86 and/or the overall welding of the second conductor to the second end 14b of the battery unit housing 14. In some embodiments, the subset of the bumps 86 configured to melt comprises all of the bumps 86. In some embodiments, the subset of the bumps 86 configured to melt comprises at least half of the bumps 86. In some embodiments, the subset of the bumps 86 configured to melt comprises less than half of the bumps 86, and the bumps 86 positioned closest to the approximate center of the second conductor 42 may be configured to melt first during the welding operation. Therefore, when the subset of the bumps 86 configured to melt is less than the total number of bumps 86 included in the bumpy portion 82, this subset comprises the most centrally positioned bumps 86.

A subset of the bumps 86 being configured to melt increases the required peel force of the second conductor 42. In addition, the melting of all or a subset of the bumps reduces the resistance in the battery unit 10 between the housing 14 and the second conductor 42.

Compared with a flat current collecting plate, the bumps 86 that are formed on the second conductor 42 melt more effectively because the bumps 86 provide a higher resistance between the second conductor 42 and the battery housing 14, which in turn generates more heat when current flows through the bumps 86; as a result, the possibility of a failed welding process is reduced. In addition, the bumpy portion 82 provides a reduced resistance in the battery unit 10, because the subset of the bumps 86 constructed to melt and the remaining bumps 86 all remain in contact with the battery unit housing 14 after the welding process.

As mentioned above, a connecting part 72 and a current collecting boss 80 together form a cantilever beam that protrudes from a main body part 70 of the second conductor 42. In the present invention, a number of advantages are obtained by the use of such a design. For example, because a portion (for example, a welding part) of the second conductor 42 that is welded to the electrode assembly 18 is physically separated, by a though opening 74, from a portion (for example, the bumpy portion 82) of the second conductor 42 that is welded to the battery housing 14, thermal deformation of the second conductor 42 during welding to the electrode assembly 18 is not easily transferred to the bumpy portion 82, because the through opening 74, which essentially surrounds a current collecting boss 80, releases most of the stress or strain. It can be said that the through opening 74 is formed as a stress-relief opening. That is, the thermal deformation produced during the welding of the second conductor 42 with the electrode assembly 18 does not easily cause the bumpy portion 82 to deform or curl, thus overcoming or avoiding the possible subsequent poor welding of the second conductor 42 to the battery housing 14. As a result, the reliability of the battery is improved. Similarly, during welding of the bumpy portion 82 to the battery housing 14, the thermal deformation resulting from the welding is not easily transferred to the main body part 72, particularly the part welded to the electrode assembly 18, due to the through opening 74, which overcomes or avoids problems such as the weld of the second conductor 42 and electrode assembly 18 coming off or cracking due to the welding process of the battery housing 14, and improves the reliability of welding. In addition, because the bumpy portion 82 can be moved to a certain extent relative to the main body part 70, this reduces the welding resistance during welding and allows for a better welding process.

In another aspect, the current collecting boss 80 or bumpy portion 82 of the second conductor 42 as a cantilever beam is welded to the battery housing 14, and the main body part 70 of the second conductor 42 is welded to the electrode assembly 18, which allows some elasticity or relative movement between the two different welding sites, thereby preventing, or essentially preventing, the separation of the welding region on the first side 76 between the electrode assembly 18 and the second conductor or current collecting plate 42 and/or the welding region on the second side 78 between the battery housing 14 and the second conductor or current collecting plate 42 when a vibration or shock is applied to the battery unit 10. In other words, the surrounding welding region at the first side 76 and the centrally located welding region at the second side 78 can move freely of each other in a flexible/independent manner, which may thereby prevent or essentially prevent the separation of the welding region. In an embodiment of the present invention, the width of the welding region 80 is greater than the width of the connecting part 72. That is, the connecting part 72 is less wide that the welding region 80, which helps to allow the surrounding welding region at the first side 76 and the centrally located welding region at the second side 78 to move freely of each other in a flexible/independent manner, while also providing a larger through opening 74 to make it easier for an electrolyte to flow through. In an embodiment of the present invention, the width of the connecting part is 50 - 80% of the width of the welding region.

As one of the optional implementations of this embodiment, the shape and size of the second conductor or current collecting plate 42 may be appropriately adjusted according to different types of batteries to which the second conductor or current collecting plate is applied. As an example, referring to Fig. 1, taking the current collecting plate 42 applied to a cylindrical battery as an example, the housing 14 of the battery may be approximately elliptical, the current collecting plate 42 may be approximately disk shaped, and the central axis of the current collecting boss 80 in a length direction may coincide with the diameter of the housing 14.

Again referring to Figs. 4A and 4B, possible dimensions of the second conductor 42 are further shown. The second conductor 42 may have a width W1 in a transverse direction. In some embodiments, the width W1 is between approximately 3.00 mm and approximately 10.00 mm (for example, approximately 6.00 mm). However, for a given application, values less than 3.00 mm and greater than 10.00 mm can also be considered as needed.

The second conductor 42 may have an overall length L1 in a longitudinal or extension direction. In some embodiments, the length L1 is between approximately 14.00 mm and approximately 22.00 mm (for example, approximately 18.00 mm). However, values less than 14.00 mm and greater than 22.00 mm can also be considered according to the requirements of a given application.

The bumpy portion 82 may have an overall width and overall length. In some embodiments, the overall width of the bumpy portion 82 is between approximately 1.50 mm and approximately 4.50 mm (for example, approximately 3.00 mm). However, for a given application, values less than 1.5 mm and greater than 4.50 mm can also be considered as needed. In some embodiments, the total length of the bumpy portion 82 is between approximately 1.50 mm and approximately 4.50 mm (for example, approximately 3.00 mm). However, for a given application, values less than 1.50 mm and greater than 4.50 mm can also be considered as needed. Therefore, in general, the bumpy portion 82 has a large area, which makes operating on the second conductor 42 easier to automate; for example, the second conductor 42 is easier to locate and grab with an automated device to facilitate the assembly and equipping of a battery unit 10.

Each bump 86 may have a diameter of D1 (Fig. 5A). In some embodiments, the diameter D1 is between approximately 0.15 mm and approximately 0.45 mm (for example, approximately 0.30 mm). However, for a given application, values less than 0.15 mm and greater than 0.45 mm can also be considered as needed.

As shown in Fig. 4B, the second conductor 42 may have a first thickness T1 and a second thickness T2. The first thickness T1 may be a thickness of the second conductor 42 in a region of the conductor 42 excluding the bumpy portion 82, and the second thickness T2 may be a thickness of the second conductor 42 in a region of the conductor 42 including the bumpy portion 82. In some embodiments, the first thickness T1 is between approximately 0.05 mm and approximately 0.15 mm (for example, approximately 0.10 mm). However, for a given application, values less than 0.05 mm and greater than 0.15 mm can also be considered as required. In some embodiments, the second thickness T2 is between approximately 0.10 mm and 0.30 mm (for example, approximately 0.20 mm). However, for a given application, values less than 0.10 mm and greater than 0.30 mm can also be considered as needed. As mentioned above, due to use of a design of a through opening 74 being provided between the main body part 70 and the current collecting boss 80, shrinkage deformation will not easily occur during the welding of the second conductor 42, which brings about or saves on approximately 0.10 mm of height space for the electrode assembly 18 or cell, which is beneficial for using this height space to further increase the capacity of the battery unit 10.

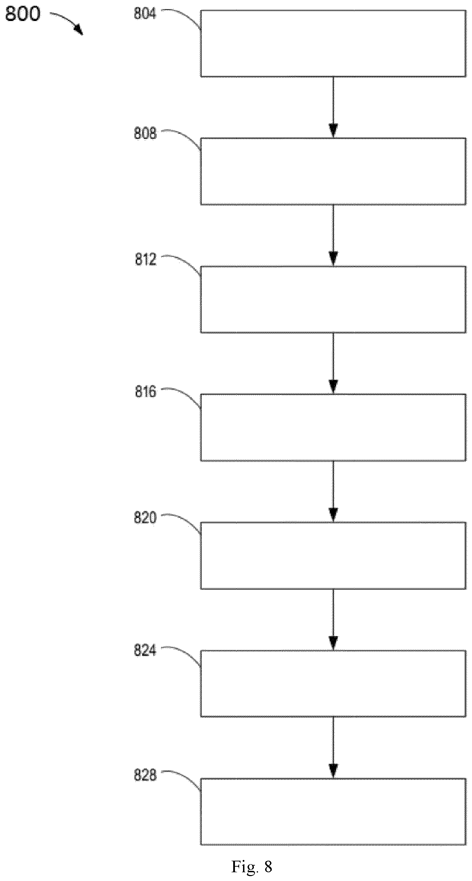

Fig. 8 is a flowchart illustrating a method or process 800 used to assemble or connect electrical elements of a battery unit 10. Each box in the method 800 is shown in a specific order in Fig. 8; however, the boxes can be reordered according to the requirements of a given application. In box 804, a positive electrode 46, a negative electrode 50 and an isolating member 54 are rolled into concentric layers around a central hole 58 of the electrode assembly 18 to form a jelly roll, thus forming the electrode assembly 18. In box 808, the electrode assembly 18 is rubbed flat to produce a second flattened portion 66, as detailed above. In box 812, a portion of a second side 78 of the second conductor 42 is molded. In one embodiment, the second side 78 of the second conductor 42 is stamped to have a bumpy portion 82, by means of a stamping operation, wherein a force is applied to a first side 76 of the second conductor 42. In some examples, during the stamping process, a mold or press may be used with complementary raised and recessed portions corresponding to the desired bumpy portion. Although the process 800 describes the use of a stamping process to form the bumpy portion, it can be expected that other processes and/or techniques may be used to form the bumpy portion depending on the requirements of a given application.

In box 816, the electrode assembly 18 is electrically connected to the first side 76 of the second conductor 42. For example, the second flattened portion 66 of the electrode assembly 18 is welded to the first side 76 of the second conductor 42, for example, welded to the welding part of the second conductor 42. In box 820, a welding head (for example, a welding head 94) is inserted through the central hole 58 of the electrode assembly 18 and contacts the second conductor 42, and specifically contacts the first side 76 of the second conductor 42. In box 824, a current is applied to the first side 76 of the second conductor 42 through the welding head, in order to perform a resistance welding operation. However, depending on the requirements of a given application, other welding operations or processes may also be conceived of, such as laser welding, arc welding, flattening welding and/or other welding operations. In box 828, the second side 78 of the second conductor 42 is welded to the battery unit housing 14, based on the welding operation applied.

Although the description herein is based on embodiments, it is by no means the case that each embodiment comprises only one independent technical solution. This manner of presentation is adopted herein purely for the sake of clarity. Those skilled in the art should consider the specification in its entirety; the technical solutions in different embodiments may also be suitably combined to form other embodiments understandable to those skilled in the art. The scope of the present invention is defined by the attached claims, rather than by the above description. Thus, it is intended that all modifications falling within the meaning and scope of equivalent key elements of the claims shall be included in the present invention.

To a person skilled in the art, the present invention is not limited to the details of the demonstrative embodiments above, and may be implemented in other specific forms without deviating from the spirit or basic features of the present invention. Therefore, the above embodiments should be regarded as demonstrative and non-limiting.

## Claims

1. Current collecting plate for a negative electrode of a battery unit, **characterized in that** the current collecting plate comprises:
a main body part that forms a main body of the current collecting plate;
a welding region that is arranged at the approximate center of the main body part; and
a connecting part that connects the welding region to the main body part, wherein in addition to being connected to the connecting part, the welding region is separated from the main body part by a through opening.

2. Current collecting plate according to Claim 1, wherein the through opening is formed into an approximate U shape around the welding region.

3. Current collecting plate according to Claim 2, wherein the welding region is provided with a bumpy portion for welding to a housing of the battery unit.

4. Current collecting plate according to Claim 3, wherein the bumpy portion is formed by stamping the welding region itself, or the bumpy portion is electrically connected to the welding region.

5. Current collecting plate according to Claim 3, wherein the current collecting plate comprises a first side that faces an electrode assembly and a second side that faces the housing, and the bumpy portion is located on the second side and comprises multiple bumps, wherein a subset of the multiple bumps is constructed to be welded to the housing.

6. Current collecting plate according to Claim 5, wherein the multiple bumps are formed into a rectangular arrangement, a round arrangement, a regular polygonal arrangement or a triangular arrangement.

7. Current collecting plate according to Claim 2, wherein the welding region comprises a flat surface to be connected by laser welding to a housing of the battery unit.

8. Current collecting plate according to any one of Claims 1-7, wherein the width of the welding region is greater than the width of the connecting part.

9. Current collecting plate according to Claim 8, wherein the width of the connecting part is 50 - 80% of the width of the welding region.

10. Current collecting plate according to any one of Claims 1 - 7, wherein the current collecting plate is an integral member that is obtained by stamping a metal plate.

11. Battery unit, comprising:
a cylindrical housing, the cylindrical housing comprising a first end and a second end that is opposite the first end, wherein the second end is closed;
an electrode assembly, the electrode assembly being positioned in the housing between the first end and the second end, and the electrode assembly comprising a positive electrode, a negative electrode and a separator between the positive electrode and the negative electrode; and
the current collecting plate for a negative electrode of a battery unit according to any one of Claims 1 - 10, the current collecting plate being electrically connected to the housing.

12. Battery unit according to Claim 11, wherein the negative electrode, the positive electrode and the separator are rolled into concentric layers around a central hole, and the welding region is coaxial with the central hole.

13. Battery unit according to Claim 11 or 12, wherein the welding region is provided with a bumpy portion for being welded to the housing of the battery unit, and the bumpy portion is coaxial with the central hole.

14. Battery unit according to Claim 12, wherein the welding region is larger than the central hole.
